# EUROPEAN PATENT SPECIFICATION

(11) **EP 3 085 284 B1**
(45) Date of publication and mention of the grant of the patent: **21.08.2019**
(21) Application number: 16159524.4
(22) Date of filing: 09.03.2016
(51) Int. Cl.: A47J 33/00, A47J 37/07, F24C 1/16, F24B 1/20

(54) **STAND FOR A DUTCH OVEN**
STÄNDER FÜR EINEN BRATENTOPF
SUPPORT POUR UN FOUR HOLLANDAIS

(30) Priority: 23.04.2015 TW 104112950
(43) Date of publication of application: 26.10.2016
(73) Proprietor: Industro International Co., Ltd., Taichung City 407 (TW)
(72) Inventor: Huang, Kuo-Chan, 407 Taichung City (TW)
(74) Representative: Lang, Christian

(56) References cited:
- US-A- 3 025 849
- US-A- 4 385 619
- US-A- 5 174 197
- US-A- 5 179 932
- US-B1- 8 783 241

## Description

### BACKGROUND OF INVENTION

### 1. FIELD OF INVENTION

The present invention relates to a Dutch oven and, more particularly, to a stand for a Dutch oven.

### 2. RELATED PRIOR ART

Barbecue provides food and fun for people There are various types of equipment and utensils to facilitate barbecue. For example, a grill is disclosed in Taiwanese Patent M448235. The grill includes a bowl 10 and a grid 20. The bowl 10 includes a bottom plate 12, vents 121 in the bottom plate 12, and brackets 13 on an internal side. Coal is filled in the bowl 10, on the bottom plate 12. The coal is ignited before the grid 20 is inserted in the bowl 10, on the brackets 13. Then, food is cooked on the grid 20. However, it is difficult to use the grill with a Dutch oven to cook stew or soup.

From document US 8, 783, 241 B1 a stand for a Dutch oven pot is known comprising a ring to support the Dutch oven pot. Three legs are screwed to the ring for supporting the ring. However, the legs of the stand are screwed to the ring in a fixed position, leaving the stand as a rigid structure incapable of any adjustments or modifications regarding the stand's height, width or orientation.

The present invention is therefore intended to obviate or at least alleviate the problems encountered in prior art.

### SUMMARY OF INVENTION

It is the primary objective of the present invention to provide a stand for a Dutch oven.

To achieve the foregoing objective, the stand includes a ring, legs, connectors, a hook unit and an accessory. Each of the legs includes a branch formed on an internal side. Each of the connectors pivotally connects a corresponding one of the legs to the ring. The hook unit includes a tube, a rod connected to the tube at an end, and a hook formed at another end of the rod. The spring is inserted in the tube and formed with two ends engaged with the ring. The accessory includes a lug for engagement with the hook and a rim for abutment against the branches to prevent the stand from collapsing.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is an exploded view of a stand for a Dutch oven according to the first embodiment of the present invention;
FIG. 2 is a perspective view of a coal tray used with the stand shown in FIG. 1;
FIG. 3 is a perspective view of a Dutch oven used with the coal tray and the stand shown in FIG. 2;
FIG. 4 is a perspective view of the Dutch oven in another position relative to the coal tray and the stand other than shown in FIG. 3;
FIG. 5 is a perspective view of a grid;
FIG. 6 is a perspective view of the grid of FIG. 5, the stand of FIG. 2 in an inverted position and a coal tray assembly; and
FIG. 7 is an enlarged, partial, cut-away view of the stand according to the second embodiment of the present invention shown in FIG. 6.

### DETAILED DESCRIPTION OF EMBODIMENTS

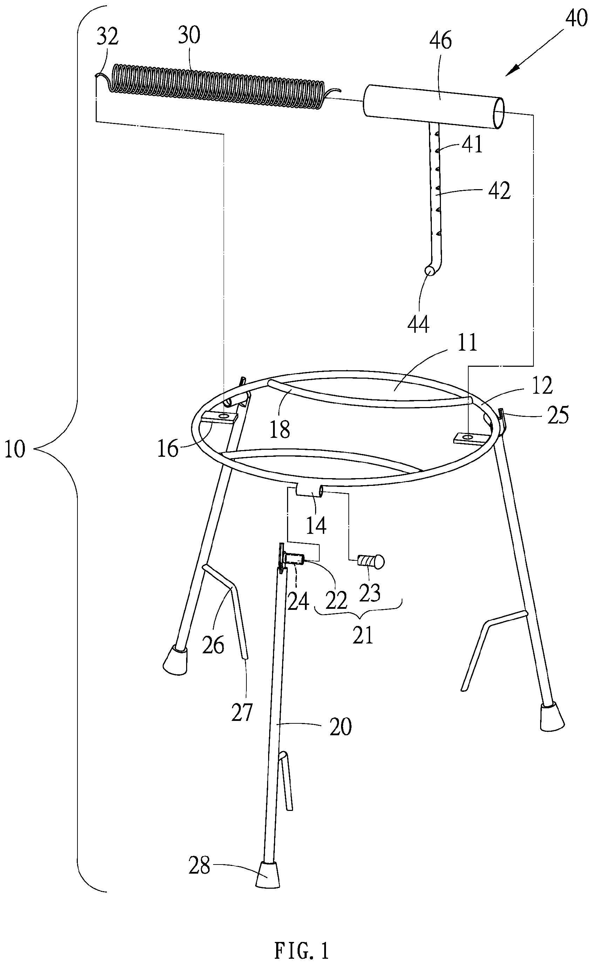

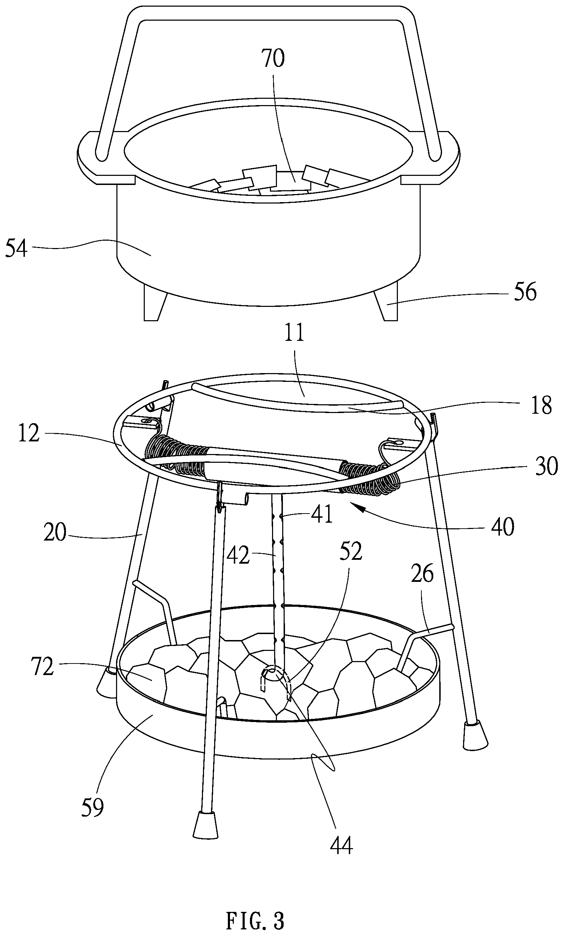

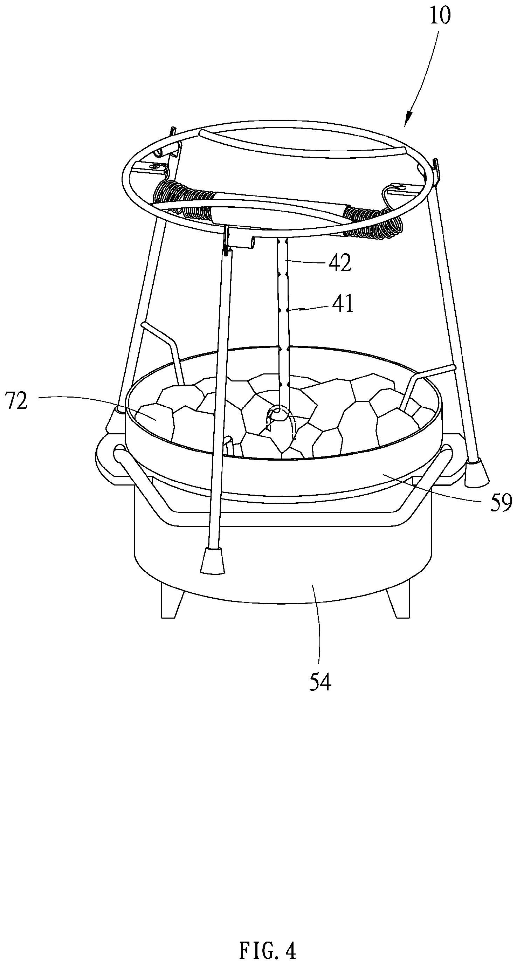

Referring to FIG. 1, there is devised a stand 10 according to a first embodiment of the present invention. The stand 10 can be used with Dutch oven 54 (FIGS. 3 and 4). The stand 10 includes a ring 12, at least three legs 20, at least three connectors 21 to pivotally connect the legs 20 to the ring 12, a hook unit 40, and a spring 30 to connect the hook unit 40 to the ring 12.

Two strips 16 are located in and connected to the ring 12 by welding for example. Each of the strips 16 includes an aperture (not numbered) made therein. Two arched rods 18 are located in and connected to the ring 12 by welding for example so that space 11 is made by each of the arched rods 18 and a corresponding portion of the ring 12.

Each of the legs 20 includes an end formed with a protrusion 25 for abutment against an external side of the ring 12 and another end inserted in a shoe 28. Each of the legs 20 further includes a branch 26 extending from an internal side. The branch 26 includes a free end 27.

Each of the connectors 21 includes a sleeve 14, a pivot 22 and a threaded bolt 23. The sleeve 14 is located in and connected to the ring 12 by welding for example. By welding for example, the pivot 22 is secured to the end of the corresponding leg 20 that is formed with the protrusion 25. The pivot 22 is a hollow element with a thread 24 formed on an internal side. The pivot 22 is inserted in the sleeve 14. The threaded bolt 23 is inserted in the pivot 22 and engaged with the thread 24. The threaded bolt 23 includes a head (not numbered) made with diameter larger than an internal diameter of the sleeve 14 so that the pivot 22 is kept in the sleeve 14.

The hook unit 40 includes a rod 42, a hook 44 and a tube 46. The rod 42 is connected to the tube 46 at an end and formed with the hook 44 at another end. The rod 42 includes recesses 41 made therein.

The spring 30 is preferably a helical spring that includes two looped or crooked ends 32. The spring 30 is inserted in the tube 46. The looped or crooked ends 32 of the spring 30 are engaged with the strips 16.

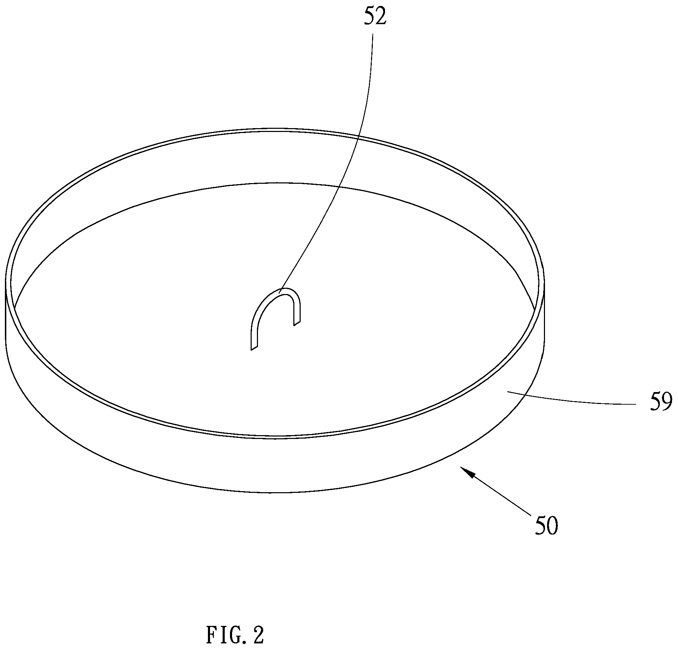

Referring to FIG. 2, a coal tray 50 includes a bottom plate (not numbered), a rim 59 and a lug 52. The rim 59 is formed on the bottom plate of the coal tray 50. The lug 52 is formed on the bottom plate of the coal tray 50 and located in the rim 59.

Referring to FIG. 3, the hook 44 is engaged with the lug 52. Thus, the coal tray 50 is connected to the stand 10. The free ends 27 of the branches 26 are inserted in the coal tray 50 and abutted against the rim 59 of the coal tray 50. Thus, the shoes 28 are restrained by the coal tray 50, and the stand 10 is prevented from collapsing. Coal 72 is filled in the coal tray 50. The Dutch oven 54, which includes three bumps 56 extending from the bottom, is supported on both of the ring 12 and the arched rod 18. Food 70 is cooked in the Dutch oven 54.

Referring to FIG. 4, the stand 10 is supported on the coal tray 50, which is supported on the Dutch oven 54. The food 72 is cooked or kept warm in the Dutch oven 54 by burning coal located on the coal tray 50.

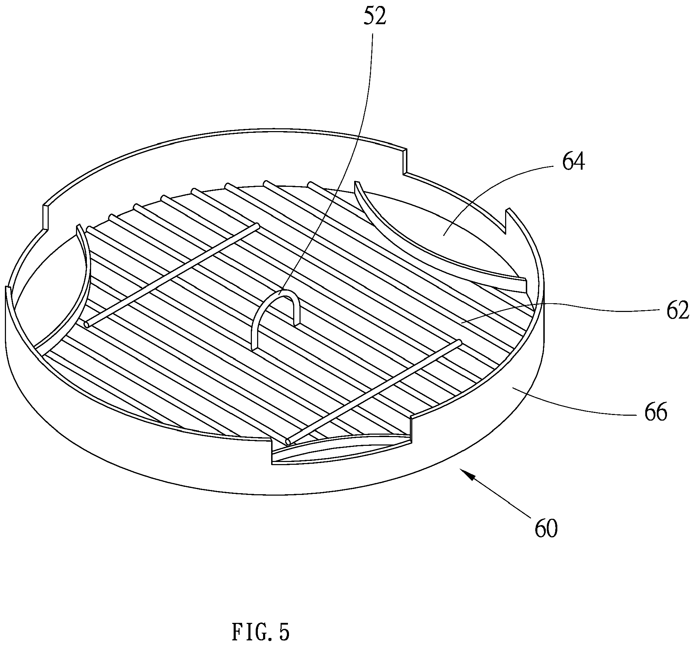

Referring to FIG. 5, a grid 60 includes a rim 66, rods 62, three plates 64 and a lug 52. The rods 62 and the plates 64 are located in and secured to the rim 66 of the grid 60 by welding for example. The lug 52 is secured to some of the rods 62 by welding for example.

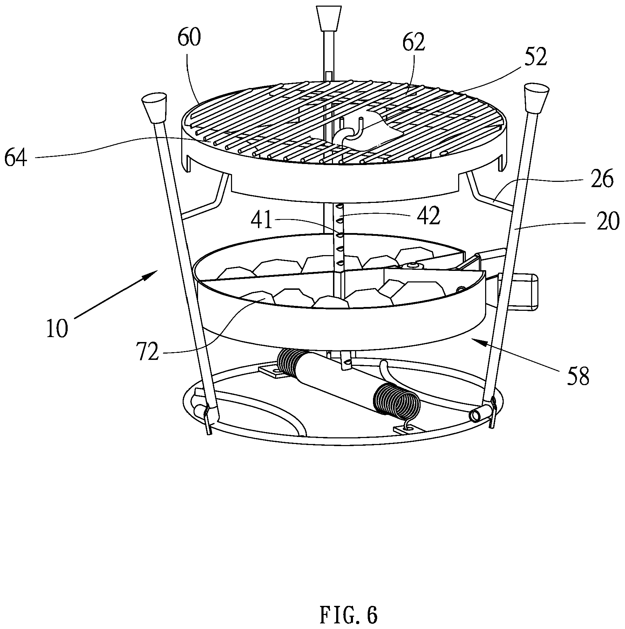

Referring to FIG. 6, the stand 10 and the grid 60 are inverted. The protrusions 25 of the legs 20 are laid on the ground. The branches 26 are inserted in and abutted against the rim 66 of the grid 60. The free ends 27 of the branches 26 are abutted against the plates 64. Thus, the stand 10 is prevented from collapsing, and the grid 60 is firmly supported on the stand 10. The hook 44 is engaged with the lug 52. Thus, the rod 42 is kept upright. A coal tray assembly 58 that includes two trays that can be opened like a pair of scissors is attached to the rod 42 at a selected one of several positions along the rod 42. However, the tray coal tray assembly 58 will not be described in detail for not being the spirit of the present invention.

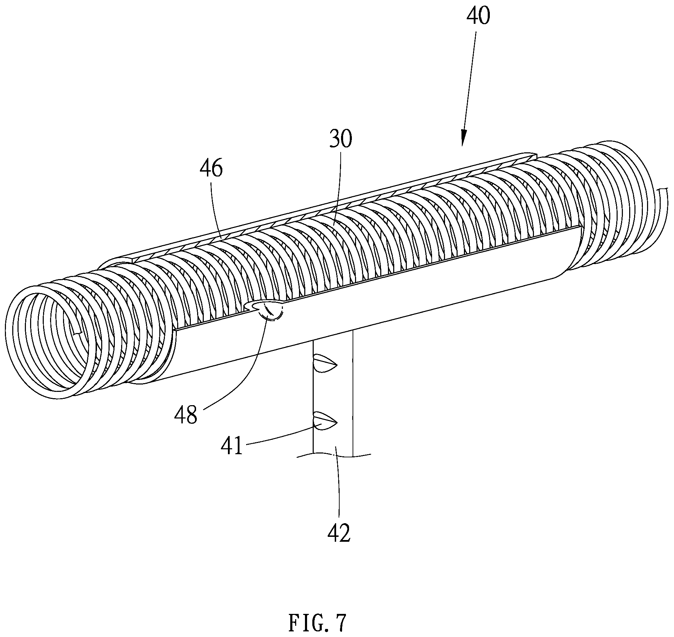

Referring to FIG. 7, there is a stand 10 according to a second embodiment of the present invention 7. The second embodiment is like the first embodiment except for one feature that the tube 46 includes at least one boss 48 formed on an internal side. The boss 48 is pressed against the spring 30 to prevent the tube 46 from rotation relative to the spring 30.

The present invention has been described via the detailed illustration of the preferred embodiment. Those skilled in the art can derive variations from the embodiments without departing from the scope of the present invention. Therefore, the embodiments shall not limit the scope of the present invention defined in the claims.

## Claims

1. A stand (10) comprises:
a ring (12) comprising sleeves (14) formed thereon; and
legs (20),
**characterized in that**
each leg (20) comprises:
a pivot (22) inserted in a corresponding one of the sleeves (14) to pivotally connect the legs (20) to the ring (12); and
a protrusion (25) for abutment against the ring (12) to limit outward pivoting of the legs (20) relative to the ring (12).

2. The stand (10) according to claim 1, further comprising threaded bolts (23) each inserted in a corresponding one of the pivots (22) to keep the pivots (22) in the sleeves (14).

3. The stand (10) according to claim 1, wherein the protrusions (25) allow inward pivoting of the legs (20) relative to the ring (12).

4. The stand (10) according to claim 1, further comprising:
a hook unit (40) comprising a rod (42), a hook (44) connected to an end of the rod (42), and a tube (46) connected to another end of the rod (42); and
a spring (30) inserted in the tube (46) and formed with two ends engaged with the ring (12); and
an accessory comprising a rim (66) formed thereon and a lug (52) for engagement with the hook (44);
wherein each of the legs (20) comprises a branch (26) for abutment against the rim (66).

5. The stand (10) according to claim 4, wherein the ring (12) comprises two strips (16) connected to the ring (12) and engaged with the ends of the spring (30).

6. The stand (10) according to claim 1, wherein the ring (12) comprises arched rods (18) each connected to an internal side of the ring (12) at two ends.

7. The stand (10) according to claim 1, wherein the tube (46) comprises at least one boss (48) formed on an internal side and pressed against the spring (30).

8. The stand (10) according to claim 1, wherein the rod (42) is made with a series of recesses (41).

9. The stand (10) according to claim 1, wherein the accessory is selected from the group consisting of a coal tray (50) and a grid (60).

10. The stand (10) according to claim 9, wherein the grid (60) comprises:
at least one plate (64) connected to the rim (66); and
rods (42) connected to the rim (66), wherein at least one of the rods (42) is connected to the plate (64), wherein the at least one of the rods (42) is connected to the lug (52).

## Patentansprüche

1. Ständer (10), der umfasst:
einen Ring (12), der Hülsen (14) umfasst, die daran ausgebildet sind, und
Beine (20),
**dadurch gekennzeichnet, dass**
jedes Bein (20) umfasst:
einen Drehzapfen (22), der in eine Entsprechende der Hülsen (14) gesteckt ist, um die Beine (20) drehbar mit dem Ring (12) zu verbinden, und
einen Vorsprung (25) zum Anschlag gegen den Ring (12), um ein Ausschwenken der Beine (20) relativ zu dem Ring (12) zu begrenzen.

2. Ständer (10) gemäß Anspruch 1, der ferner Gewindebolzen (23) umfasst, von denen jeder in einen Entsprechenden der Drehzapfen (22) gesteckt ist, um die Drehzapfen (22) in den Hülsen (14) zu halten.

3. Ständer (10) gemäß Anspruch 1, bei dem die Vorsprünge (25) ein Einschwenken der Beine (20) relativ zu dem Ring (12) erlauben.

4. Ständer (10) gemäß Anspruch 1, der ferner umfasst:
eine Hakeneinheit (40), die eine Stange (42), einen Haken (44), der mit dem Ende der Stange (42) verbunden ist, und ein Rohr (46), das mit einem anderen Ende der Stange (42) verbunden ist, umfasst, und
eine Feder (30), die in das Rohr (46) gesteckt ist und mit zwei Enden ausgebildet ist, die mit dem Ring (12) in Eingriff stehen, und
ein Zubehör, das einen Rand (66), der daran ausgebildet ist, und einen Ansatz (52) zum Eingriff mit dem Haken (44) umfasst,
wobei jedes der Beine (20) einen Zweig (26) zum Anschlag gegen den Rand (66) umfasst.

5. Ständer (10) gemäß Anspruch 4, bei dem der Ring (12) zwei Streifen (16) umfasst, die mit dem Ring (12) verbunden sind und mit den Enden der Feder (30) in Eingriff stehen.

6. Ständer (10) gemäß Anspruch 1, bei dem der Ring (12) gekrümmte Stangen (18) umfasst, von der jede an zwei Enden mit einer inneren Seite des Ringes (12) verbunden ist.

7. Ständer (10) gemäß Anspruch 1, bei dem das Rohr (46) zumindest einen Ansatz (48) umfasst, der an einer inneren Seite ausgebildet und gegen die Feder (30) gedrückt ist.

8. Ständer (10) gemäß Anspruch 1, bei dem die Stange (42) mit einer Serie an Aussparungen (41) ausgebildet ist.

9. Ständer (10) gemäß Anspruch 1, bei dem das Zubehör aus der Gruppe ausgewählt ist, die aus einer Kohlenablage (50) und einem Gitter (60) besteht.

10. Ständer (10) gemäß Anspruch 9, bei dem das Gitter (60) umfasst:
zumindest eine Platte (64), die mit dem Rand (66) verbunden ist, und
Stangen (42), die mit dem Rand (66) verbunden sind, wobei zumindest eine der Stangen (42) mit der Platte (64) verbunden ist, wobei die zumindest eine der Stangen (42) mit dem Ansatz (52) verbunden ist.

## Revendications

1. Support (10) comprenant:
un anneau (12) comprenant des manchons (14) formés sur celui-ci; et
des branches (20),
**caractérisé en ce que**
chaque branche (20) comprend:
un pivot (22) inséré dans un correspondant des manchons (14) pour raccorder de manière pivotante les branches (20) à l'anneau (12); et
une saillie (25) pour la butée contre l'anneau (12) pour limiter le pivotement vers l'extérieur des branches (20) par rapport à l'anneau (12).

2. Support (10) selon la revendication 1, comprenant en outre des boulons filetés (23) insérés chacun dans un correspondant des pivots (22) pour maintenir les pivots (22) dans les manchons (14).

3. Support (10) selon la revendication 1, dans lequel les saillies (25) permettent le pivotement vers l'intérieur des branches (20) par rapport à l'anneau (12).

4. Support (10) selon la revendication 1, comprenant en outre:
une unité de crochet (40) comprenant une tige (42), un crochet (44) raccordé à une extrémité de la tige (42), et un tube (46) raccordé à l'autre extrémité de la tige (42); et
un ressort (30) inséré dans le tube (46) et formé avec deux extrémités mis en prise avec l'anneau (12); et
un accessoire comprenant un bord (66) formé sur celui-ci et un ergot (52) pour la mise en prise avec le crochet (44);
dans lequel chacune des branches (20) comprend une branche (26) pour la butée contre le bord (66).

5. Support (10) selon la revendication 4, dans lequel l'anneau (12) comprend deux bandes (16) raccordées à l'anneau (12) et mises en prise avec les extrémités du ressort (30).

6. Support (10) selon la revendication 1, dans lequel l'anneau (12) comprend des tiges arquées (18) raccordées chacune à un côté interne de l'anneau (12) sur deux extrémités.

7. Support (10) selon la revendication 1, dans lequel le tube (46) comprend au moins une bosse (48) formée sur un côté interne et pressée contre le ressort (30).

8. Support (10) selon la revendication 1, dans lequel la tige (42) est réalisée avec une série d'évidements (41).

9. Support (10) selon la revendication 1, dans lequel l'accessoire est sélectionné dans le groupe composé d'un bac de charbon (50) et d'une grille (60).

10. Support (10) selon la revendication 9, dans lequel la grille (60) comprend:
au moins une plaque (64) raccordée au bord (66); et
des tiges (42) raccordées au bord (66), dans lequel au moins une des tiges (42) est raccordée à la plaque (64), dans lequel l'au moins une des tiges (42) est raccordée à l'ergot (52).
